# EUROPEAN PATENT APPLICATION

(11) **EP 4 567 960 A1**
(43) Date of publication of application: **11.06.2025**
(21) Application number: 24193587.3
(22) Date of filing: 08.08.2024
(51) Int. Cl.: H01M 10/46, H01M 10/613, H01M 10/615, H01M 10/6563, H01M 10/617

(54) **HEAT VACUUM CHARGE-DISCHARGE APPARATUS AND METHOD OF COOLING THE SAME**

(30) Priority: 06.12.2023 KR 20230175826
(71) Applicant: Samsung SDI Co., Ltd., Yongin-si, Gyeonggi-do 17084 (KR)
(72) Inventor: Lee, Jaedeuk, Yongin-si, Gyeonggi-do 17084 (KR); Pyo, Young-Hak, Yongin-si, Gyeonggi-do 17084 (KR); Cho, Byoung Chul, Yongin-si, Gyeonggi-do 17084 (KR); Heo, Hyungu, Yongin-si, Gyeonggi-do 17084 (KR); Yoo, Keunsik, Yongin-si, Gyeonggi-do 17084 (KR)
(74) Representative: Gulde & Partner

(57) **Abstract**

A heat vacuum charge-discharge apparatus includes: a chamber; a charge-discharge structure to perform a charge-discharge process to a plurality of battery cells that are preheated and positioned within the chamber; a cooling structure connected to the chamber, and including a plurality of coolers that are grouped into a plurality of cooling groups according to cooling areas; and a cooling controller to control each of the cooling groups to perform a cooling operation for the battery cells according to the cooling areas in the charge-discharge process.

## Description

### BACKGROUND

### 1. Field

Aspects of embodiments of the present disclosure relate to a heat vacuum charge-discharge apparatus, and a method of cooling the heat vacuum charge-discharge apparatus.

### 2. Description of the Related Art

Secondary batteries may be widely used as an energy source for mobile devices and vehicles, and are provided as a product through an assembly process and a formation process. Secondary cells assembled by sealing electrode assemblies and an electrolyte into a cell housing are stabilized by exposure to an environment having a predetermined temperature and humidity, and may achieve stable electrical characteristics by repeating a charge-discharge process. As such, a heat vacuum charge-discharge apparatus that is able to maintain a uniform or substantially uniform cell temperature during the charge-discharge process may be desired.

The above information disclosed in this Background section is for enhancement of understanding of the background of the present disclosure, and therefore, it may contain information that does not constitute prior art.

### SUMMARY

One or more embodiments of the present disclosure are directed to a heat vacuum charge-discharge apparatus able to perform cooling according to individualized processes or methods for each cooling setting areas.

One or more embodiments of the present disclosure are be directed to a method of cooling a secondary battery during a charge-discharge process using the heat vacuum charge-discharge apparatus.

However, the aspects and features of the present disclosure are not limited to those described above, and the above and other aspects and features of the present disclosure may be more clearly understood by those having ordinary skill in the art from the following description.

According to a first aspect of the present disclosure a heat vacuum charge-discharge apparatus comprises a (e.g. three-dimensional) chamber, a charge-discharge structure configured to perform a charge-discharge process to a plurality of (e.g. preheated) battery cells which are positioned within the chamber, a cooling structure connected (e.g. fixed) to the chamber and comprising a plurality of coolers that are grouped into a plurality of cooling groups according to cooling areas, and a cooling controller configured to control each of the cooling groups to perform a cooling operation for the battery cells is performed according to the cooling areas in the charge-discharge process.

Preferably, the cooling controller as described before is configured to perform the cooling method according to the second aspect of this disclosure, as described in the following, for cooling the battery cells according to the cooling areas in the charge-discharge process, wherein the cooling controller further comprises: a battery information detector configured to detect a type and an alignment shape of the battery cells input into the chamber; a map creator configured to create a cooling map by matching the cooling areas the cooling groups according to the type and the alignment shape; a process setter configured to set a cooling table corresponding to the cooling map as a cooling process; and a cooling driver configured to obtain detection temperatures detected from the cooling areas and drive the cooling groups according to driving conditions of the cooling process corresponding to the detection temperatures, respectively.

According to an preferred embodiment, the cooling structure may comprise a ceiling cooler positioned on an intermediate portion of a ceiling plate of the chamber to cool an intermediate portion of the battery cells positioned below the ceiling cooler, first and second coolers positioned on first and second sidewalls of the chamber, respectively, the first and second sidewalls facing each other, and a lower cooler positioned on a bottom of the chamber to cool a lower portion of the battery cells positioned above the lower cooler, and wherein the first and second coolers are configured to cool a first side portion, a second side portion, and the intermediate portion of the battery cells.

Preferably, the afore mentioned ceiling cooler may include a plurality of first fans aligned side by side in a first direction which is a transverse direction of the chamber, and aligned in line along a second direction that is a longitudinal direction of the chamber, and wherein the first cooler may include a plurality of second fans aligned side by side in the first direction, and respectively aligned in line along the second direction. The second cooler may include a plurality of second fans aligned side by side in the first direction and respectively aligned in line along the second direction.

According to another preferred embodiment, the cooling groups may include first to third cooling groups configured to cool first to third cooling areas located adjacent in the second direction on the intermediate portion of the battery cells, fourth to sixth cooling groups configured to cool fourth to sixth cooling areas adjacent to the first to third cooling areas, respectively, on opposite side portions of the battery cells, and a seventh cooling group configured to cool lower portions of the first to sixth cooling areas, wherein the first to third cooling groups are associated with the ceiling cooler, wherein the fourth to sixth cooling groups are associated with the first and second coolers, and wherein the seventh cooling group is associated with the lower cooler.

According to another preferred embodiment, the cooling controller may include a battery information detector configured to detect a type and an alignment shape of the battery cells input into the chamber, a map creator configured to create a cooling map by matching the cooling areas and the cooling groups according to the type and the alignment shape, a process setter configured to set a cooling table corresponding to the cooling map as a cooling process, and a cooling driver configured to obtain detection temperatures detected from the cooling areas (e.g. by a plurality of temperature sensors), and configured to drive the cooling groups according to driving conditions of the cooling process corresponding to the detection temperatures, respectively.

More preferably, the afore mentioned battery information detector may include a reader configured to read bar codes on the battery cells and a tray detector configured to detect information regarding a shape and an alignment aspect of a receiving tray containing the battery cells.

The afore mentioned process setter may be configured to set a cooling table corresponding to the cooling map as a cooling process, wherein more preferably the cooling table may comprise the driving conditions of the cooling groups according to drive starting temperatures of the cooling areas that are sorted according to the drive starting temperatures.

Further, the afore mentioned driving conditions may define (e.g. set) a ratio of an actual output voltage with respect to a maximum output voltage of the cooling fan so that the cooling fan is driven in a rotation mode in which a number of revolutions is controlled.

In addition, or in alternative to the above, the afore mentioned driving conditions may define (e.g. set) a ratio of an actual operation time with respect to a maximum operation time of a corresponding cooling fan so that the cooling fan is driven in a duty mode in which the operation time is controlled.

Preferably, the afore mentioned cooling driver may further be configured to obtain detection temperatures detected from the cooling areas, wherein the detection temperatures may include at least one of battery temperatures actually detected from the battery cells positioned in the cooling areas or bottom temperatures actually detected from a bottom plate of the chamber.

According to another preferred embodiment, the charge-discharge structure may comprise a battery receptacle configured to contain the battery cells by aligning the battery cells, and configured to heat the battery cells to maintain a predetermined temperature, a plurality of terminals connected (e.g. fixed) to a ceiling plate of the chamber and configured to be selectively in contact with the battery cells and apply charge-discharge current for the battery cells, and a lift configured to move the battery receptacle up and down so that the terminals are selectively in contact with the battery cells.

Preferably, the battery receptacle may further comprise a stage having a plate shape, and comprising a heater configured to heat the battery cells positioned on the stage, a plurality of receiving trays extending in a second direction on an upper surface of the stage, and spaced from each other in a first direction to contain the battery cells, and a plurality of temperature sensors positioned according to the cooling areas along the receiving trays to detect battery temperatures of the battery cells positioned in the cooling areas and transmit the detected battery temperatures to the cooling controller.

In addition, or in alternative to the above, the afore mentioned plurality of terminals may preferably include a plurality of electrode terminal pairs aligned along the receiving trays and in contact with positive and negative electrodes of the battery cells and a plurality of vacuum hoppers positioned between the electrode terminal pairs to extract and remove a reaction gas generated by a chemical reaction inside corresponding ones of the battery cells.

In addition, or in alternative to the above, the afore mentioned lift may preferably include a lift head connected to a bottom surface of the stage and a lift driver positioned on a bottom portion of the chamber to move the lift head up and down.

According to another preferred embodiment, the heat vacuum charge-discharge apparatus may further include an ambient air supply positioned outside the chamber, wherein the ambient air supply is configured to supply ambient air into the chamber.

According to a second aspect of the resent disclosure, a method of cooling a heat vacuum charge-discharge apparatus includes creating a cooling map comprising cooling areas of a plurality of battery cells loaded into a chamber comprising a plurality of coolers that are matched with cooling groups, each of the cooling groups comprising at least one cooler from among the plurality of coolers, setting a cooling table corresponding to the cooling map as a cooling process wherein the cooling table is one among a plurality of cooling tables comprising driving conditions of the cooling groups that are sorted according to drive starting temperatures of the cooling areas, obtaining a detection temperature for each of the cooling areas during a heat vacuum charge-discharge process for the battery cells that are preheated, and cooling the battery cells according to the cooling areas by respectively driving the cooling groups based on the obtained detection temperature of each of the cooling areas and the cooling process.

According to a preferred implementation, the cooling map may be categorized according to a type and an alignment shape of the battery cell, wherein the cooling table may include a tag corresponding to the type and the alignment shape of the battery cell, and wherein in the setting of the cooling table as the cooling process, a cooling table having the tag corresponding to the type and the alignment shape of the cooling map may be selected from among the cooling tables.

According to a preferred implementation, the cooling of the battery cells according to the cooling areas may include determining a driving condition from among the driving conditions of the cooling groups corresponding to the detection temperature of each of the cooling areas from the cooling process, and driving the cooling groups according to the determined driving conditions, respectively.

According a preferred implementation, each of the cooling groups may include at least one cooling fan, and wherein the driving condition may be set at a ratio of an actual output voltage with respect to a maximum output voltage of the cooling fan.

According to a preferred implementation, each of the cooling groups may include at least one cooling fan, and the driving condition may be set at a ratio of an actual operation time with respect to a maximum operation time of the cooling fan.

According to one or more embodiments of the present disclosure, the temperatures of the battery cells may be uniformly or substantially uniformly maintained for areas during the charge-discharge process by cooling the battery cells aligned on a stage according to set or predetermined cooling areas, respectively.

In some embodiments, after preheating to activate the electrolyte, the heat vacuum charge-discharge apparatus may perform the charge-discharge process. Thus, due to individual reaction heat resulting from the charge-discharge process and the preheating (e.g., the initial preheating), the battery cells may have temperature differences (e.g., significant temperature differences) from one another. As a result, the temperature differences in the battery cells in which the heat vacuum charge-discharge process is performed may not be overcome (e.g., may not be easily overcome) using a comparative battery cooling method of uniformly cooling the battery cells at the same time as the start of the charge-discharge.

According to one or more embodiments of the present disclosure, a cooling performance may be controlled for the cooling areas by considering temperature differences in the cooling areas due to the preheating (e.g., the initial preheating), respectively. For a cooling area having a relatively higher temperature, the cooling performance may be increased by relatively increasing the number of revolutions or an operation time of a cooling fan. For a cooling area having a relatively lower temperature, the cooling performance may be decreased by relatively decreasing the number of revolutions or the operation time of a cooling fan.

Accordingly, in some embodiments, the temperature of the battery cells may be maintained uniformly or substantially uniformly during the heat vacuum charge-discharge process, regardless of the initial temperature differences due to the preheating.

In some embodiments, due to the cooling by the cooling groups that are independently driven according to the cooling areas, respectively, the battery may be quickly cooled to a uniform or substantially uniform temperature, even in a case where the batteries have significant temperature differences from one another due to the preheating of the battery.

However, technical effects of the present disclosure are not limited to those described above. The above and other aspects and features of the present disclosure may be more clearly understood by those having ordinary skill in the art from the detailed description below with reference to the drawings.

### BRIEF DESCRIPTION OF DRAWINGS

The above and other aspects and features of the present disclosure will be more clearly understood from the following detailed description of the illustrative, non-limiting embodiments with reference to the accompanying drawings, in which:
FIG. 1 illustrates a front view of a heat vacuum charge-discharge apparatus according to one or more embodiments of the present disclosure;
FIG. 2 illustrates a perspective view of a battery receptacle provided in the heat vacuum charge-discharge apparatus illustrated in FIG. 1;
FIG. 3 illustrates an ambient air supply illustrated in FIG. 1 according to one or more embodiments of the present disclosure;
FIG. 4 is a perspective view showing a part of a cooling structure provided in the heat vacuum charge-discharge apparatus illustrated in FIG. 1;
FIG. 5 is a plan view showing the cooling structure illustrated in FIG. 4 and cooling groups of the cooling structure;
FIG. 6 is a view showing the cooling groups illustrated in FIG. 5 and cooling areas corresponding to the cooling groups;
FIG. 7 illustrates a block diagram showing a configuration of a cooling controller illustrated in FIG. 1;
FIG. 8 illustrates a flowchart of a method of cooling battery cells during a charge-discharge in the heat vacuum charge-discharge apparatus illustrated in FIG. 1; and
FIG. 9 illustrates a flowchart of a method of driving cooling groups according to cooling areas, respectively.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, and the like as being "the same" as each other may mean that they are "substantially the same" as each other. Thus, the phrase "substantially the same" may include a case having a deviation that is considered low in the art, for example, such as a deviation of 5% or less. In addition, when a certain parameter is referred to as being uniform in a given region, it may mean that it is uniform in terms of an average.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Generally, during a charge-discharge process of a secondary battery, an irreversible reaction of an electrolyte and an additive may occur due to the formation of a solid electrolyte interphase (SEI) layer, thereby generating a reaction gas generated inside a battery housing. A vacuum charge-discharge apparatus may be provided with a terminal for performing the charge-discharge process by contact with the battery cell and a vacuum hopper configured to remove a reaction gas, and may remove the reaction gas within the battery housing in real time during the charge-discharge process.

In this case, the vacuum charge-discharge apparatus may be provided with a heater arranged in a lower part of a tray to uniformly or substantially uniformly heat the battery received in a receiving tray, to increase the activity of the electrolyte and increase the purity of the battery through discharging of residual gases and impurities. Thus, the vacuum charge-discharge apparatus may be used as a heat vacuum charge-discharge apparatus.

Accordingly, in a case where the charge-discharge process is performed to a battery using the heat vacuum charge-discharge apparatus, pre-heating may be carried out by heating the battery in advance using a heater before the charge-discharge process, in order to increase the activity of the electrolyte.

However, the pre-heating of the battery is performed to heat the entire receiving tray, rather than respective battery cells, and thus, the battery cells contained in the receiving tray may have temperature differences from one another depending on the position thereof in the receiving tray. In a case where the charge-discharge process is performed on an individual cell-by-cell basis, heat generated by the charge-discharge process may cause the battery cells to have different temperatures from one another.

Because the battery cells have different temperatures from one another, all of the battery cells may not be maintained at a uniform or substantially uniform temperature, even in a case where a cooling fan provided in the charge-discharge apparatus is operated. In a case where the charge-discharge process is performed at different temperatures, the formation of electrolyte interface layers for the batteries may differ according to the battery, thereby making it difficult to achieve a uniform or substantially uniform battery performance.

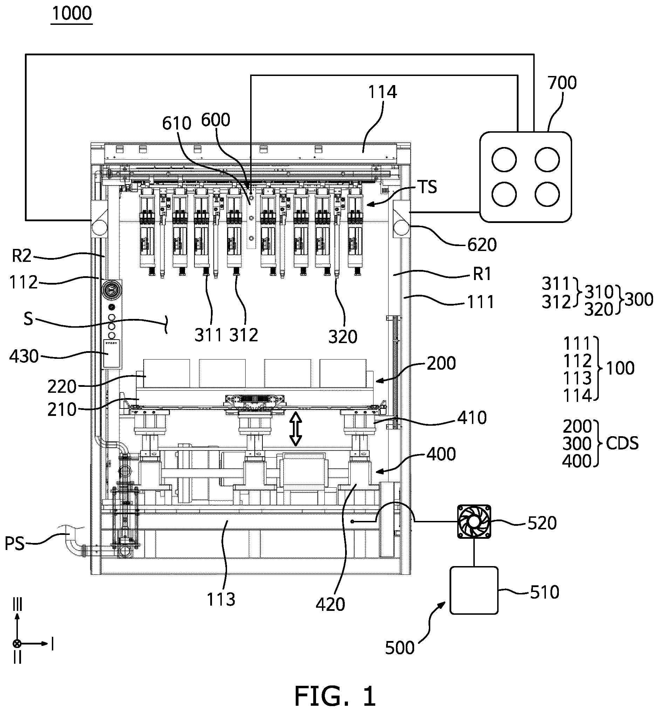

FIG. 1 illustrates a front view of a heat vacuum charge-discharge apparatus 1000 according to one or more embodiments of the present disclosure.

Referring to FIG. 1, the heat vacuum charge-discharge apparatus 1000 according to one or more embodiments of the present disclosure includes a chamber 100, a charge-discharge structure CDS, a cooling structure 600, and a cooling controller 700. The chamber 100 may include an entrance/exit gate, (not illustrated) and may have an internal space separated from the outside. The charge-discharge structure CDS is configured to perform a charge-discharge process for battery cells EC. The cooling structure 600 is configured to cool the battery cells EC during the charge-discharge process. The cooling controller 700 is configured to control the cooling structure 600 to cool the battery cells EC according to respective cooling setting areas CA of the battery cells EC.

In some embodiments, the charge-discharge structure CDS may include a battery receptacle 200 containing the battery cells EC loaded through the gate, terminals 300 fixed on an upper portion of the chamber 100 and being selectively in contact with the battery cells EC to apply a charge-discharge current, a lift 400 for moving the battery receptacle 200 up and down, and an ambient air supply 500 for supplying ambient air into the chamber 100. In this case, the ambient air supply 500 may be referred to as a lower cooler.

For example, the chamber 100 may contain an internal structure separated from the outside to provide a charge-discharge space for the battery cells EC and perform the charge-discharge process. In the present embodiment, the chamber 100 may be implemented as a frame having a suitable strength, and may include first and second sidewalls 111 and 112, a bottom plate 113, and a ceiling plate 114.

Drive rods R1 and R2 configured to reciprocally move in a third direction III (e.g., in a height direction of the chamber), may be positioned on the first and second sidewalls 111 and 112. The terminals 300 for supplying the current for the charge-discharge process may be positioned on the ceiling plate 114, and the lift 400 for transporting the battery receptacle 200 and a power source PS for driving the lift 400 may be positioned on the bottom plate 113.

The chamber 100 may serve as a base frame for fixing and driving the battery receptacle 200, the terminals 300, and the lift 400.

The battery receptacle 200 may contain a plurality of battery cells EC by aligning the battery cells EC, and may be configured to heat the battery cells EC at a suitable temperature (e.g., a predetermined temperature).

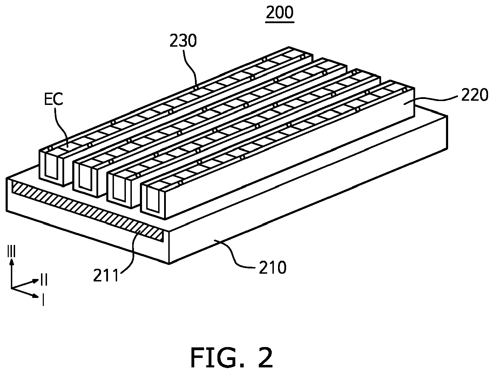

FIG. 2 illustrates a perspective view of the battery receptacle provided in the heat vacuum charge-discharge apparatus illustrated in FIG. 1.

Referring to FIG. 2, the battery receptacle 200 may include a stage 210, receiving trays 220, and battery temperature sensors 230. The stage 210 may include a heater 211 therein to heat the battery cells EC. For example, the heater 211 may have a shape of a plate extending in a second direction II (e.g., a longitudinal direction of the chamber 100), and may have a width in a first direction I (e.g., a transverse direction of the chamber 100).

The stage 210 may be provided as a plate having a suitable strength to be firmly connected to (e.g., coupled to or attached to) the lift 400, while supporting the receiving trays 220, in which the battery cells EC are contained, and the heater 211. For example, the stage 210 may be provided to have a suitable size to contain the batteries EC of various suitable sizes that are supplied to the charge-discharge apparatus 1000.

The heater 211 may be positioned inside the stage 210 to concurrently or substantially simultaneously heat the battery cells EC positioned on the stage 210. For example, the heater 211 may be implemented to have a surface heating element that is in contact with the stage 210 and configured to provide concurrent or substantially simultaneous heating through the contact surface. In this case, the heater 211 may heat the receiving tray 220 through the upper surface of the stage 210. In another example, the heater 211 may be configured to directly heat the receiving trays 220, with the upper surface thereof being in direct contact with the receiving trays 220.

The heater 211 may preheat the battery cells EC, such that the electrolyte contained in each of the battery cells EC is activated in advance, and a sufficient amount of reaction gas is generated. Thus, the preheating temperature of the battery cells EC that are preheated by the heater 211 may be set in advance (e.g., may be predetermined) in consideration of the kind of the battery cells EC.

The receiving trays 220 may be positioned on the upper surface of the stage 210 to extend in the second direction II, and may be spaced apart from each other in the first direction I so as to contain the battery cells EC.

Each of the receiving trays 220 may have a trench space extending in the second direction II and having an open top, thereby allowing a plurality of battery cells EC to be aligned in the second direction II in the trench space. For example, 24 battery cells EC may be simultaneously aligned in the trench space of each of the receiving trays 220. In this case, a total of 96 battery cells EC may be positioned in 4 receiving trays 220.

The plurality of battery cells EC are contained in the receiving trays 220 from outside the chamber 100, and may be loaded on the stage 210 through the gate of the chamber 100. In this case, the battery cells EC may be loaded using a transport means, such as a robot arm.

A number of the receiving trays 220 corresponding to the allowable capacity of the charge-discharge apparatus 1000 may be supplied. For example, 4 receiving trays 220 may be loaded on the stage 210 so that the charge-discharge process for all 96 battery cells EC may be performed concurrently or substantially simultaneously with each other. However, the number of batteries being charged-discharged together may be variously modified depending on the kind and the size of the batteries and the size of the receiving trays 220.

Although the heater 211 is illustrated as being the surface heating element for generating a Joule heat using power in FIG. 2, the present disclosure is not limited thereto, and various suitable kinds of heating elements may be used as the heater 211.

The battery temperature sensors 230 may be positioned on the surface of the receiving trays 220 to detect a battery temperature that is increased by internal reaction heat of the batteries generated from the battery cells EC during the charge-discharge process. The battery temperature sensors 230 may be positioned to measure temperatures of a suitable number (e.g., a predetermined number) of the battery cells EC.

The battery cells EC may be implemented as chemical cells, such as lithium (Li) ion cells. Thus, the charge and discharge of the battery cells EC may be accompanied with an exothermic chemical reaction between the electrode assembly and the electrolyte inside each of the battery cells EC, and the reaction heat may be dissipated from the battery cells EC.

The battery temperature sensors 230 may detect the temperatures of the battery cells EC that are increased by the dissipating reaction heat, and transmit the detected temperature to the cooling controller 700 described in more detail below. Thus, in a case where any of the temperatures of the battery cells EC reaches a threshold temperature (e.g., a predetermined temperature), the cooling controller 700 may operate the cooling structure 600 and may manage the temperature differences and an upper temperature limit in a desired temperature range.

In this case, the battery temperature sensors 230 may have various positions depending on the precision of the cooling control. For example, the battery temperature sensors 230 may be positioned on the battery cells EC, respectively. As another example, the battery temperature sensors 230 may be positioned in the cooling setting areas CA, respectively, in which each of the cooling setting areas CA includes some of the battery cells EC. As another example, some battery cells EC may be combined with each other by a unit of detection, and the battery temperature sensors 230 may be positioned according to unit of the detection. For example, in a case where 96 battery cells EC are positioned in 4 receiving trays 220, 16 battery temperature sensors 230 may be used to measure the temperatures of battery cell groups, each including 6 of the battery cells EC.

Each of the battery temperature sensors 230 may include a thermistor (e.g., a metal-semiconductor temperature sensor), a thermocouple, a bimetal thermometer, or the like for precise temperature detection.

In some embodiments, the terminals 300 may be fixed to the ceiling plate of the chamber 100, and be selectively in contact with the battery cells EC to apply a charge-discharge current to the battery cells EC. The terminals 300 may include electrode terminals 310 including positive terminals 311 in contact with positive electrodes of the battery cells EC, and negative terminals 312 in contact with negative electrodes of the battery cells EC. The terminals 300 may include vacuum hoppers 320 positioned between the positive terminals 311 and the negative terminals 312 to be in contact with the battery cells EC, to extract a reaction gas from the battery cells EC during the charging/discharging process.

The electrode terminals 310 may be connected to an external power source, and may be in contact with the positive and negative electrodes of the battery cells EC through the positive terminals 311 and the negative terminals 312. In this case, the battery cells EC may be charged or discharged by changing a polarity of the external power source applied to the positive terminals 311 and the negative terminals 312. The charging and discharging of the battery cells EC may reversibly change the chemical reaction occurring inside the battery cells EC, and may be performed by changing the polarity of a battery supplied energy by means of the positive terminals 311 and the negative terminals 312.

While the electrode terminals 310 are in contact with the battery cells EC, the vacuum hoppers 320 may be in contact with the battery cells EC to extract the reaction gas generated by the chemical reaction together with the electrolyte from the battery cells EC using a vacuum pressure. Thereafter, the reaction gas inside the battery cells EC may be extracted to the outside by degassing the reaction gas to the outside, and returning the electrolyte to the battery cells EC.

The electrode terminals 310 and the vacuum hoppers 320 may form single terminals 300, and at the same time, may be in contact with or separated from the battery cells EC.

In some embodiments, the vacuum hoppers 320 of the electrode terminals 310 may be positioned by the battery cells EC, respectively. Thus, in a case where a plurality of battery cells EC are contained in a single receiving tray 220, the electrode terminals 310 and the vacuum hoppers 320 may extend along the receiving tray 220 in the second direction II, thereby forming a terminal row TS. Accordingly, a single terminal row TS may be concurrently or substantially simultaneously in contact with the battery cells EC contained in the single receiving tray 220.

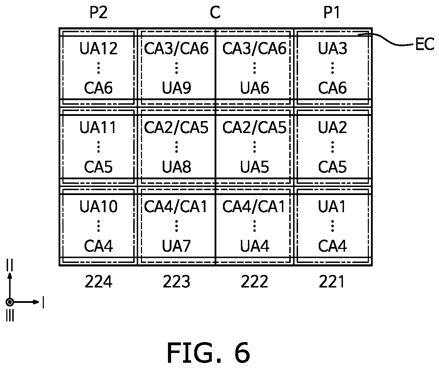

In the present embodiment, if the 4 receiving trays 220 (e.g., 221, 222, 223, and 224 in FIG. 6) are loaded on the stage 210, 4 terminal row TS may be provided above the 4 receiving trays 220, respectively. Thus, a plurality of battery cells EC contained in the 4 receiving trays 220 may be concurrently or substantially simultaneously in contact with the 4 terminal rows TS. Accordingly, for the battery cells EC contained in the 4 receiving trays 220 (e.g., 221, 222, 223, and 224), the charge-discharge process and the degassing process may be performed concurrently or substantially simultaneously with each other.

The lift 400 may be positioned on the bottom plate 113 to move the battery receptacle 200 up and down, so that the terminals 300 may be selectively in contact with the battery cells EC. For example, the lift 400 may include a lift head 410 connected to a bottom surface of the stage 210, and a lift driver 420 positioned on the bottom plate 113 of the chamber to reciprocally move the lift head 410 in the third direction III.

The lift head 410 may include a coupling flat plate connected to (e.g., coupled to or attached to) the bottom surface of the stage 210 to support the stage 210, and a lift rod connected to the coupling flat plate and extending downward. The lift rod may be connected to (e.g., coupled to or attached to) the lift driver 420, and may be driven by a drive part of the lift driver 420 to perform a piston motion so as to move up and down in the third direction III. Accordingly, the lift rod may move up and down, while supporting the stage 210, so as to move the battery cells EC positioned on the stage 210 up and down.

The lift driver 420 may move the lift rod up and down according to a control logic of the charge-discharge process using a drive power capable of driving the lift rod. In the present embodiment, the drive power may be transmitted to the lift driver 420 by the external power source PS. The power source PS may include a hydraulic source or a power supply.

In some embodiments, the lift 400 may further include a lift guide 430 connected to the lift head 410, and allowing the stage 210 to move up and down along the first and second sidewalls 111 and 112. The lift guide 430 may include linear guide rails positioned on the first and second sidewalls 111 and 112, respectively, and drive guides connected to (e.g., coupled to or attached to) the guide rails to linearly move in the upward and downward directions in response to the upward and downward movement of the lift head 410. The lift guide 430 may allow the battery receptacle 200 to linearly move in the upward and downward directions.

The cooling structure 600 for preventing or substantially preventing increases in the temperature of the battery cells EC due to the reaction heat generated during the charge-discharge process may be implemented as an air-cooling structure, such as a cooling fan. Thus, the ambient air having a lower temperature than those of the battery cells EC may be continuously supplied into the chamber 100 for efficient cooling of the battery cells EC. Thus, the ambient air supply 500 may be positioned outside the chamber 100.

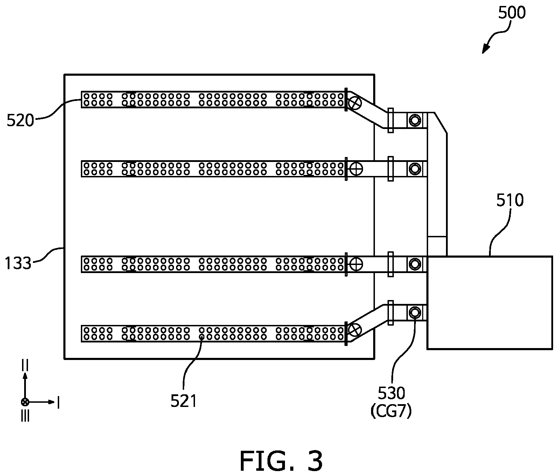

FIG. 3 illustrates the ambient air supply illustrated in FIG. 1 according to one or more embodiments of the present disclosure.

Referring to FIG. 3, the ambient air supply 500 may include an ambient air intake terminal 510, branch lines 520, and flow control structures 530. For example, the ambient air intake terminal 510 may be implemented as a tube positioned outside the chamber 100 to draw in relatively-cold ambient air. The ambient air of the tube may be drawn into the tube by maintaining or substantially maintaining the internal pressure of the tube to be lower than the atmospheric pressure. In this case, a filter (e.g., a precise filter) may be positioned in the ambient air intake terminal 510 to remove impurities contained in the ambient air, thereby improving the purity of the ambient air supplied to the chamber 100.

The branch lines 520 may branch from the ambient air intake terminal 510 to be distributed on the upper surface of the bottom plate 113 of the chamber 100. Thus, the branch lines 520 may be positioned between the lift driver 420 and the bottom plate 113 to supply the ambient air into the chamber 100. For example, the branch lines 520 may include 4 supply lines branching from the ambient air intake terminal 510 to be positioned on the upper surface of the bottom plate 113, and may be spaced apart from each other in equal or substantially equal distances. Thus, the ambient air supplied from the ambient air intake terminal 510 may be uniformly or substantially uniformly supplied upwards from the bottom plate 113 along the second direction II.

In addition, a plurality of supply holes 521 may be uniformly or substantially uniformly positioned in the branch lines 520 along the first direction I. The ambient air supplied through the branch lines 520 is supplied to an upper portion of the chamber 100 through the supply holes 521. Thus, the ambient air may be uniformly or substantially uniformly supplied along the first direction I.

In some embodiments, a bottom temperature sensor may be positioned on an upper portion of a corresponding one of the branch lines 520 to detect a bottom temperature of an area adjacent to the branch line 520. The detected bottom temperature may be transmitted to the cooling controller 700 so that a flow rate of the ambient air supplied into the chamber 100 may be controlled depending on the bottom temperature.

Each of the flow control structures 530 may be positioned on an inlet of a corresponding one of the branch lines 520 to supply the ambient air from the intake terminal 510 to the corresponding branch line 520. The flow control structures 530 may control the air to flow toward the branch lines 520, respectively. Thus, the ambient air may be forced to flow from the air intake terminal 510 toward the branch lines 520.

In the present embodiment, the flow control structures 530 may be provided as forced flow structures to force the air flow. For example, each of the flow control structures 530 may include a cooling fan to cool the bottom plate 113 of the chamber 100 as needed or desired to lower the bottom temperature to be equal to or lower than a threshold temperature (e.g., a set or predetermined temperature).

The operations of the flow control structures 530 may be controlled by the cooling controller 700 described in more detail below to systematically cool the battery cells EC together with the cooling structure 600.

In some embodiments, the cooling structure 600 may be positioned in the upper portion of the chamber 100 to cool the battery cells EC, while the charge-discharge process is being performed, due to air circulation. For example, the cooling structure 600 may be fixed in the upper portion of the chamber 100, and may include a plurality of cooling groups CG grouped according to the cooling setting areas CA, respectively, to cool the battery cells EC according to the cooling setting areas CA in the charge-discharge process.

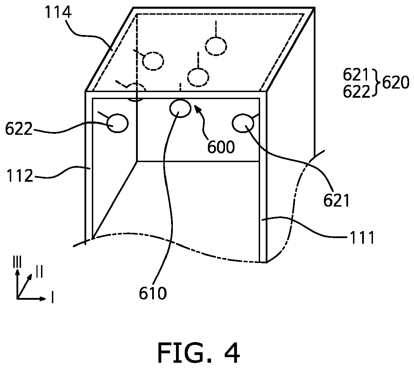

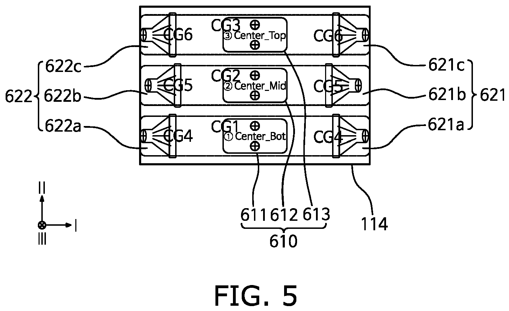

FIG. 4 is a perspective view showing a part of the cooling structure provided in the heat vacuum charge-discharge apparatus illustrated in FIG. 1. FIG. 5 is a plan view showing the cooling structure illustrated in FIG. 4 and the cooling groups of the cooling structure. FIG. 6 is a view showing the cooling groups illustrated in FIG. 5 and the cooling areas corresponding to the cooling groups.

Referring to FIGS. 4 to 6, the cooling structure 600 may include ceiling coolers 610 and side coolers 620. The ceiling coolers 610 may be positioned in an intermediate portion of the ceiling plate 114 to cool an intermediate portion C of the battery cells EC located below intermediate portion of the ceiling plate 114 and below the corresponding ceiling coolers 610. The side coolers 620 may be positioned on the first and second sidewalls 111 and 112 of the chamber 100 to cool first and second side portions P1 and P2 and the intermediate portion C of the battery cells EC.

The intermediate portion C and the side portions P1 and P2 of the battery cells EC are contained in the receiving trays 220 to be defined based on a rectangular alignment shape determined in the first direction I and the second direction II. In the present embodiment, 4 receiving trays 220, each containing 24 battery cells EC, are aligned on the stage 210, and thus, a total of 96 battery cells EC are aligned in a rectangular shape.

The ceiling coolers 610 may be implemented as a plurality of coolers (e.g., cooling fans) positioned on the intermediate portion of the ceiling plate 114, and aligned with each other in line in the second direction II. For example, the ceiling coolers 610 may be positioned between a second terminal row and a third terminal row corresponding to a second receiving tray 222 and a third receiving tray 223, respectively, in order to prevent or substantially prevent an interference with the terminal row TS positioned on the ceiling plate 114. In an example, the ceiling coolers 610 may be fixed to the ceiling plate 114.

In some embodiments, a plurality of cooling fans may be aligned in the second direction II at suitable distances (e.g., predetermined distances) from each other, between the second terminal row and the third terminal row. In this case, each of the cooling fans may extend downward to be located at the same first cooling level (e.g., same first height) as each other. The first cooling level may be a position at which the air diffusing from the cooling fans may sufficiently diffuse into the intermediate portions C of the battery cells EC located below the cooling fans.

The side coolers 620 may include first coolers 621 and second coolers 622 positioned on (e.g., above) the first and second sidewalls 111 and 112, respectively, facing each other. In the present embodiment, each of the first coolers 621 and the second coolers 622 may be implemented as a plurality of coolers (e.g., cooling fans) that are aligned in line in the second direction II, like the ceiling coolers 610.

In some embodiments, the first coolers 621 and the second coolers 622 may be positioned at an incline on upper portions of the first and second sidewalls 111 and 112. For example, the first coolers 621 may be positioned to be inclined downward to the left toward the first side portion P1, and the second coolers 622 may be positioned to be inclined downward to the right toward the second side portion P2. In addition, the first and second coolers 621 and 622 may extend at an incline from the first sidewall 111 and the second sidewall 112 to be located at the same cooling level as each other (e.g., at a single cooling level, or a second cooling level). The second cooling level may be a position at which the air diffusing from the cooling fan may sufficiently diffuse to the first and second side portions P1 and P2 of the battery cells EC located below the cooling fan.

In the present embodiment, the ceiling coolers 610 may include first to third cooling fans 611, 612, and 613 extending in line with each other in the second direction II. In addition, the first coolers 621 may include fourth to sixth cooling fans 621a, 621b, and 621c. Further, the second coolers 622 may include seventh to ninth cooling fans 622a, 622b, and 622c. However, the present disclosure is not limited thereto, and each of the ceiling coolers 610, the first coolers 621, and the second coolers 622 may include a greater number of cooling fans.

In some embodiments, the first to ninth cooling fans may be categorized into various cooling groups CG according to the cooling setting areas CA of the battery cells EC located therebelow. The cooling fans included in a single cooling group CG may be driven in a single operation to cool the corresponding cooling setting area CA.

As illustrated in FIG. 6, a plurality of battery cells EC aligned in the first direction I and the second direction II may be categorized into 12 unit areas UA1 to UA12. For example, a total of 96 battery cells EC may be categorized into 12 unit areas UA1 to UA12, each including 8 battery cells EC. Although an area including 8 battery cells EC is defined as a unit area in the present embodiment, an area including a smaller number of battery cells EC may be set to be a unit area to increase the precision of cooling.

In the present embodiment, the fourth unit area UA4 and the seventh unit area UA7 are defined as a first cooling area CA1, the fifth unit area UA5 and the eighth unit area UA8 are defined as a second cooling area CA2, and the sixth unit area UA6 and the ninth unit area UA9 are defined as a third cooling area CA3. In addition, the first unit area UA1, the fourth unit area UA4, the seventh unit area UA7, and the tenth unit area UA10 are defined as a fourth cooling area CA4. The second unit area UA2, the fifth unit area UA5, the eighth unit area UA8, and the eleventh unit area UA11 are defined as a fifth cooling area CA5. The third unit area UA3, the sixth unit area UA6, the ninth unit area UA9, and the twelfth unit area UA12 are defined as a sixth cooling area CA6. As illustrated in FIG. 6, the unit areas UA4 to UA9 of the intermediate portion C may belong to two different cooling areas.

A cooling map may be created by matching the cooling groups, each including at least one cooling fan, to the cooling areas CA1 to CA6, respectively. For example, the cooling of the first cooling area CA1 may be performed by a first cooling group CG1 including the first cooling fan 611, the cooling of the second cooling area CA2 may be performed by a second cooling group CG2 including the second cooling fan 612, and the cooling of the third cooling area CA3 may be performed by a third cooling group CG3 including the third cooling fan 613.

In addition, the cooling of the fourth cooling area CA4 may be performed by a fourth cooling group CG4 including the fourth cooling fan 621a and the seventh cooling fan 622a. The cooling of the fifth cooling area CA5 may be performed by a fifth cooling group CG5 including the fifth cooling fan 621b and the eighth cooling fan 622b. The cooling of the sixth cooling area CA6 may be performed by a sixth cooling group CG6 including the sixth cooling fan 621c and the ninth cooling fan 622c.

The flow control structures 530 positioned outside the chamber 100 to supply the ambient air into the chamber 100 may be a seventh cooling group (e.g., CG7 in FIG. 3). The seventh cooling group (e.g., CG7 in FIG. 3) may include the first to twelfth unit areas UA1 to UA12.

In some embodiments, all cooling fans included in the cooling groups CG1 to CG7 may be operated in the same conditions by the cooling controller 700 to cool the battery cells EC in the cooling areas, or supply the ambient air thereto.

The number of the cooling fans included in each of the cooling groups CG1 to CG7 may be one or more. In the present embodiment, each of the first to third cooling groups CG1 to CG3 may include a single cooling fan, but the present disclosure is not limited thereto, and each may include two or more cooling fans. In addition, each of the fourth to sixth cooling groups CG4 to CG6 includes a pair of cooling fans included in the first coolers 621 and the second coolers 622, but the present disclosure is not limited thereto, and each may include a cooling fan included in one of the first coolers 621 and the second coolers 622. In addition, the seventh cooling group CG7 may include cooling fans, the number of which is equal to or greater than the number of the branch lines 520.

The mutual correspondence of the cooling areas CA1 to CA7 and the cooling groups CG1 to CG7 may be variously modified depending on the alignment shape of the battery cells EC and the arrangement of the cooling fans, and the number of the cooling fans included in each cooling group may also be variously modified as needed or desired.

In a case where the cooling map matching the cooling areas CA1 to CA7 and the cooling groups CG1 to CG7 is generated, the cooling controller 700 may perform cooling for respective battery cells EC aligned on the stage 210 according to the cooling group. The cooling controller 700 may independently operate the cooling groups CG1 to CG7 to perform cooling for respective cooling areas CA1 to CA7 of the corresponding battery cells EC.

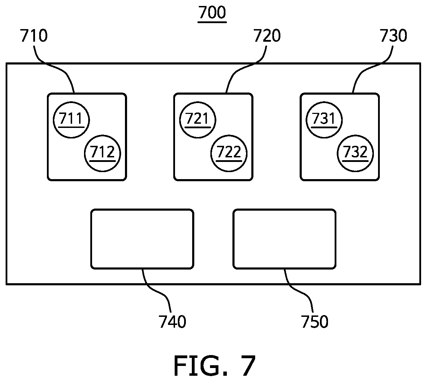

FIG. 7 illustrates a block diagram showing a configuration of the cooling controller illustrated in FIG. 1.

Referring to FIG. 7, the cooling controller 700 according to one or more embodiments of the present disclosure may include a battery information detector 710, a map creator 720, a process setter 730, a cooling driver 740, and a cooling control center 750.

In some embodiments, the battery information detector 710 may detect a type and an alignment shape of the battery cells EC input into the chamber 100. The type of the battery cells EC may be determined depending on an output voltage, a size, and the like. The alignment shape may be variously modified depending on the type of the battery cells EC, and thus, the shape of the receiving trays 220 containing the battery cells EC, the alignment aspect of the receiving trays 220 positioned on the stage 210, and the like may also be variously modified.

In the present embodiment, the battery information detector 710 may include a reader 711 for reading bar codes attached to the battery cells EC, and a tray detector 712 for detecting information regarding the shape and the alignment aspect of the receiving trays 220 containing the battery cells EC. For example, tags or bar codes including information regarding the type and the alignment shape of battery cells EC may be attached to the surfaces of the battery cells EC or the surfaces of corresponding receiving trays 220, and the type or the alignment shape of the battery cells EC may be obtained by detecting the tags or the bar codes while the receiving trays 220 containing the battery cells EC are being input into the chamber 100.

The map creator 720 may create the cooling map matching the cooling areas CA1 to CA6 and the cooling groups CG1 to CG6 according to the alignment shape of the battery cells EC. For example, the map creator 720 may include an area setter 721 and a group setter 722.

After a cooling specification regarding the battery cells EC, to which the heat vacuum charge-discharge process is performed, is input to the map creator 720, the area setter 721 sets the cooling areas CA1 to CA7 for performing the given cooling specification from the obtained alignment shape. In addition, the group setter 722 may set the cooling groups CG1 to CG7 for performing the cooling according to the cooling areas CA1 to CA7, based on the arrangement information of the cooling structure 600 provided in the chamber 100.

An optimal combination to perform the input cooling specification for the set cooling areas CA1 to CA7 may be detected from among various suitable combinations of cooling fans positioned or pre-positioned in the chamber 100, and may be set as the cooling groups CG1 to CG7. Afterwards, the cooling map may be completed by sequentially matching the set cooling areas CA1 to CA7 and the set cooling groups CG1 to CG7 with one another.

The process setter 730 may set a cooling table corresponding to the created cooling map as a cooling process. A plurality of cooling tables may be created by sorting driving conditions of the cooling groups according to the drive starting temperature for all cooling maps that may be created for the battery cells EC, and may be stored in a database 731. Respective cooling tables may be obtained from experimental results for achieving an optimal or desired cooling effect for the corresponding cooling map. In another example, the cooling tables may be obtained from accumulated cooling results of the charging/recharging batteries using the heat vacuum charge-discharge apparatus 1000. In this case, the cooling tables may be categorized by setting tags based on the type and alignment shape of the battery cells EC.

The cooling map created by the map creator 720 may be transmitted to the table detector 732, and a cooling table corresponding to the created cooling map may be searched from the database 731 and set as a cooling process. Because the cooling tables are categorized by the type of the battery cells EC and the alignment shape of the battery cells EC aligned on the stage 210, in a case where the tag of the cooling table matches the type and the alignment shape of the battery cells EC in the created cooling map, the cooling table designated by the tag may be selected as the cooling process corresponding to the created cooling map. In another example, procedures for creating the cooling map may be omitted, and the cooling table corresponding to the type and the alignment shape of the detected battery cells EC may be searched from the database 731 and set as the cooling process. In this case, the procedures for creating the cooling map may be performed in advance, stored in the database 731, and used to search for the cooling table corresponding to the type and the alignment shape of the detected battery cell EC.

The drive starting temperature of the cooling process indicates a temperature at which driving the cooling groups CG1 to CG7 is started according to the set driving conditions by comparing with the battery temperature detected in the corresponding cooling area. In addition, the driving condition of the cooling process indicates an output of each of the cooling groups CG1 to CG7 in a case where the detected temperature is higher than the drive starting temperature. In other words, the driving condition indicates the desirable strength/hour of driving of each of the cooling groups CG1 to CG7 to reduce an average temperature of the corresponding cooling areas CA1 to CA7.

The cooling driver 740 may obtain the detected battery temperature or bottom temperature from each of the cooling areas CA1 to CA7, and may drive each of the cooling groups CG1 to CG7 by comparing the obtained temperature with the driving condition of the cooling process.

The battery information detector 710, the map creator 720, the process setter 730, and the cooling driver 740 may be systematically controlled by the cooling control center 750 to separately cool the battery cells EC by the cooling zone while the charge-discharge is being performed in the heat vacuum charge-discharge apparatus 1000. Accordingly, the temperature of the battery cells EC may be stably maintained in the heat vacuum charge-discharge process.

In some embodiments, the driving conditions of the cooling table may set the ratios of an actual output voltage with respect to the maximum output voltage of the cooling fans of each of the cooling group CG1 to CG7, such that the cooling fans may be driven in a rotation mode (RPM mode) in which the number of revolutions is controlled.

Table 1 below shows an example of the cooling process provided in a rotating mode.

**Table 1:**

| No | Set Temp | CG1 | CG2 | CG3 | CG4 | CG5 | CG6 | CG7 |
|---|---|---|---|---|---|---|---|---|
| 1 | 40 | 100 | 100 | 100 | 70 | 70 | 70 | 0 |
| 2 | 43 | 100 | 100 | 100 | 70 | 70 | 70 | 70 |
| 3 | 45 | 100 | 100 | 100 | 70 | 70 | 70 | 80 |
| 4 | 46 | 100 | 100 | 100 | 75 | 75 | 75 | 80 |
| 5 | 47 | 100 | 100 | 100 | 80 | 80 | 80 | 80 |
| 6 | 48 | 100 | 100 | 100 | 80 | 80 | 80 | 85 |
| 7 | 49 | 100 | 100 | 100 | 85 | 85 | 85 | 85 |
| 8 | 50 | 100 | 100 | 100 | 85 | 85 | 85 | 90 |
| 9 | 51 | 100 | 100 | 100 | 90 | 90 | 90 | 90 |
| 10 | 52 | 100 | 100 | 100 | 90 | 90 | 90 | 95 |
| 11 | 53 | 100 | 100 | 100 | 95 | 95 | 95 | 95 |
| 12 | 54 | 100 | 100 | 100 | 95 | 95 | 95 | 100 |
| 13 | 55 | 100 | 100 | 100 | 100 | 100 | 100 | 100 |
| 14 | 56 | 100 | 100 | 100 | 100 | 100 | 100 | 100 |
| 15 | 57 | 100 | 100 | 100 | 100 | 100 | 100 | 100 |

In Table 1, Set Temp indicates drive starting temperatures, and the numerical values in each of the cooling groups CG1 to CG7 corresponding to the drive starting temperatures indicate the ratios of actual output voltages with respect to a maximum output voltage.

Thus, in a case where a battery temperature or a bottom temperature actually detected in each of the corresponding cooling areas CA1 to CA7 exceeds the drive starting temperature, the output ratios or numbers of revolutions of the respective cooling groups for cooling the entire battery cells EC and the bottom plate 113 of the chamber 100 may be determined by Table 1. For example, in a case where the cooling table corresponding to the created cooling map is given as in Table 1, and the battery temperatures or bottom temperatures of the first to seventh cooling areas CA1 to CA7 are 47.1 °C, 46.6°C, 45.2°C, 46.8°C, 45.9°C, 44.4°C, and 45.8°C, respectively, the output power or number of revolutions of the cooling fans or flow control structures of the first to seventh cooling groups CG1 to CG7 may be adjusted to be 100%, 100%, 100%, 100%, 75%, 70%, 70%, 70%, and 80% of the maximum power, respectively. In another embodiment, in a case where the battery temperatures or bottom temperatures of the first to seventh cooling areas CA1 to CA7 are below 40°C, the first to seventh cooling groups CG1 to CG7 may not be driven.

In some embodiments, the driving conditions of the cooling process may include a duty mode of controlling the operation time by setting the ratios of actual operation times with respect to the maximum operation time of the cooling fans of each of the cooling groups CG1 to CG7.

Table 2 below shows an example of the cooling process provided in the duty mode.

**Table 2:**

| No | Set Temp | CG1 | CG2 | CG3 | CG4 | CG5 | CG6 | CG7 |
|---|---|---|---|---|---|---|---|---|
| 1 | 40 | 100 | 100 | 100 | 10 | 10 | 10 | 100 |
| 2 | 43 | 100 | 100 | 100 | 20 | 20 | 20 | 100 |
| 3 | 45 | 100 | 100 | 100 | 30 | 30 | 30 | 100 |
| 4 | 46 | 100 | 100 | 100 | 35 | 35 | 35 | 100 |
| 5 | 47 | 100 | 100 | 100 | 40 | 40 | 40 | 100 |
| 6 | 48 | 100 | 100 | 100 | 45 | 45 | 45 | 100 |
| 7 | 49 | 100 | 100 | 100 | 50 | 50 | 50 | 100 |
| 8 | 50 | 100 | 100 | 100 | 55 | 55 | 55 | 100 |
| 9 | 51 | 100 | 100 | 100 | 60 | 60 | 60 | 100 |
| 10 | 52 | 100 | 100 | 100 | 65 | 65 | 65 | 100 |
| 11 | 53 | 100 | 100 | 100 | 70 | 70 | 70 | 100 |
| 12 | 54 | 100 | 100 | 100 | 75 | 75 | 75 | 100 |
| 13 | 55 | 100 | 100 | 100 | 80 | 80 | 80 | 100 |
| 14 | 56 | 100 | 100 | 100 | 90 | 90 | 90 | 100 |
| 15 | 57 | 100 | 100 | 100 | 100 | 100 | 100 | 100 |

In Table 2, Set Temp indicates drive starting temperatures, and the numerical values in each of the cooling groups CG1 to CG7 corresponding to the drive starting temperatures indicate the ratios of actual operation times with respect to 120 seconds.

Thus, in a case where a battery temperature or a bottom temperature actually detected in each of the corresponding cooling areas CA1 to CA7 exceeds the drive starting temperature, the operation times of the respective cooling groups for cooling the entire battery cells EC and the bottom plate 113 of the chamber 100 may be determined by Table 2. For example, in a case where the cooling table corresponding to the created cooling map is given as in Table 2, and the battery temperatures or bottom temperatures of the first to seventh cooling areas CA1 to CA7 are 47.1°C, 46.6°C, 45.2°C, 46.8°C, 45.9°C, 44.4°C, and 45.8°C, respectively, the first to third and seventh cooling group CG1, CG2, CG3, and CG7 may operate continuously for 120 seconds, and the fourth to sixth cooling groups CG4 to CG6 may perform on/off operations of running for 35%, 30%, and 20% of 120 seconds, respectively, and are stopped the rest of the time. Thus, for every 120 seconds, the fourth cooling group CG4 will repeat an on/off cycle of operating for 42 seconds and stopping for 78 seconds, the fifth cooling group CG5 will repeat an on/off cycle of operating for 36 seconds and stopping for 84 seconds, and the sixth cooling group CG6 will repeat an on/off cycle of operating for 24 seconds and stopping for 96 seconds. In another example, in a case where the battery temperatures or bottom temperatures of the first to seventh cooling areas CA1 to CA7 are below 40°C, the first to seventh cooling groups CG1 to CG7 may not be driven.

According to the heat vacuum charge-discharge apparatus 1000 described above, cooling may be respectively performed for the cooling zones CE1 to CE7 set for the battery cells EC aligned on stage 210 to uniformly or substantially uniformly maintain the temperature of the battery cells EC during the charge-discharge process.

Because the heat vacuum charge-discharge apparatus performs the charge-discharge process after the preheating for electrolyte activation, the battery cells EC may have significant temperature differences due to the individual reaction heat of the charge-discharge process and the initial preheating. Thus, the temperature differences of the battery cell EC subjected to the heat vacuum charge-discharge process may not be easily removed by a comparative battery cooling method in which the battery cells EC are uniformly cooled at the same time as the start of the charge-discharge.

According to embodiments of the present disclosure, cooling performance may be controlled for respective cooling areas by taking into account temperature differences in the cooling areas due to the initial preheating. For a cooling area having a relatively high temperature, the cooling performance may be increased by relatively increasing the number of revolutions or the operation time of the cooling fan. For a cooling area having a relatively low temperature, the cooling performance may be decreased by relatively decreasing the number of revolutions or the operation time of the cooling fan.

Accordingly, the temperature of the battery cells EC may be maintained uniformly or substantially uniformly during the heat vacuum charge-discharge process, regardless of initial temperature differences therebetween due to the preheating.

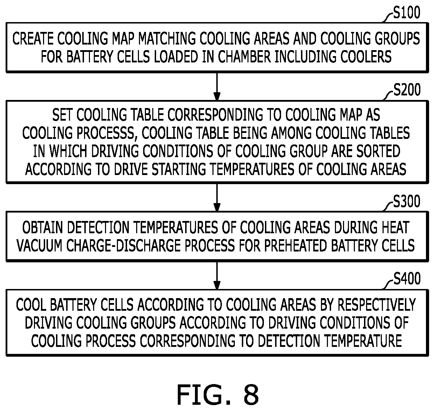

FIG. 8 illustrates a flowchart showing a method of cooling battery cells EC during a charge-discharge in the heat vacuum charge-discharge apparatus illustrated in FIG. 1. FIG. 8 illustrates an example of the method of cooling the battery cells EC during a charge-discharge process using the heat vacuum charge-discharge apparatus 1000 illustrated in FIGS. 1 to 7. As such, hereinafter with reference to FIG. 8, the same reference numerals are used to refer to the same or substantially the same components as those described above with reference to FIGS. 1 to 7, and thus, redundant description thereof may not be repeated.

Referring to FIG. 8, first, a cooling map matching the cooling areas and the cooling groups for the battery cells EC loaded into the chamber 100 including the coolers 610 and 620 may be created (S100).

Battery cells EC to be charged-discharged may be contained on the receiving trays 220, and then loaded on the stage 210 through the gate of the chamber 100. In this case, information regarding the type and alignment shape of the battery may be obtained from the battery cells EC and the receiving trays 220.

The cooling areas CA1 to CA7 of the battery cells EC are matched with the cooling groups CG1 to CG7 (e.g., combinations of a plurality of coolers are matched with the cooling areas using the type and alignment shape of the battery and input cooling specification). Thus, the cooling map in which the cooling areas CA1 to CA7 and the cooling groups CG1 to CG7 are matched in a one-to-one relationship may be created.

Each of the cooling areas CA1 to CA7 may include at least one battery cell EC, and each of the cooling groups CG1 to CG7 may include at least one cooler. The cooler may be implemented as at least one cooling fan.

A cooling table corresponding to the cooling map is set as a cooling process (S200). In the cooling table, driving conditions of the cooling groups CG1 to CG7 according to the drive starting temperature of the cooling areas CA1 to CA7 are sorted.

The cooling table may be a table in which the driving conditions of the cooling groups according to the drive starting temperatures are sorted for various cooling maps that may be created for the battery cells EC. The cooling table may be created based on the type and alignment shape of the battery cells EC, and may be stored in the database 731.

The cooling tables may be obtained from the results of tests for achieving optimal or desired cooling effects for the corresponding cooling map, or from accumulated cooling results of heated and cooled chargeable-dischargeable batteries. In this case, the cooling tables may be categorized by setting tags based on the type and alignment shape of the battery cells EC. Thus, a cooling table having a tag matching the type and alignment shape corresponding to the created cooling map may be searched from the database 731, and be set as a cooling process. In another example, the process of creating the cooling map may be omitted, and one of the cooling tables stored in the database 731 may be selected and set as the cooling process based on the obtained model and alignment shape (e.g., tray information) of the battery cells EC.

In some embodiments, a preheating process for the battery cells may be performed. While the heat vacuum charge-discharge process is being performed to the preheated battery cells, detection temperatures of a plurality of cooling areas are obtained (S300). For example, the temperature of each of the cooling areas may be an average value of the detection temperatures obtained within the corresponding cooling area.

In some embodiments, in a case where the receiving trays 220 containing the battery cells EC are aligned on the stage 210, the battery cells EC may be heated using the heater 211 provided in the stage 210. Thus, the electrolyte stored inside each of the battery cells EC may be sufficiently activated to easily remove reaction gases from the inside of the battery cells EC through the vacuum hoppers 320 during the charge-discharge process.

During the charge-discharge process, a reaction heat is continuously dissipated from the inside of the battery cells EC to increase the temperature of the battery cells EC. In this case, the battery temperatures of the first to seventh cooling areas CA1 to CA7 may be detected using the battery temperature sensors 230 positioned on the receiving trays 220. In addition or as another example, the bottom temperature (e.g., the temperature of the bottom of the chamber 100) may be detected using the bottom temperature sensor.

The battery temperature may determine the driving conditions of the first to seventh cooling groups CG1 to CG6 for the first to seventh cooling areas CA1 to CA7 from the cooling process. In addition or as another example, the bottom temperature may determine the driving conditions of the seventh cooling group CG7 for the seventh cooling area CA7 from the cooling process.

Afterwards, depending on the driving conditions of the cooling process corresponding to the detection temperature, such as the battery temperature and/or the bottom temperature, the corresponding cooling groups may be individually driven to cool the battery cells by the cooling area (S400).

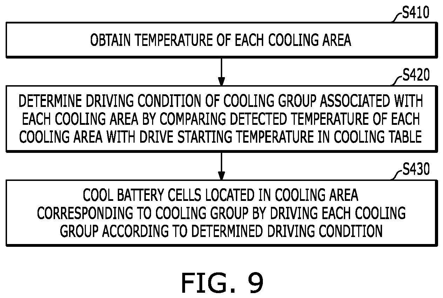

FIG. 9 illustrates a flowchart of a method of driving cooling groups according to the cooling areas, respectively. FIG. 9 illustrates an example of the method of driving cooling groups according to the cooling area using the heat vacuum charge-discharge apparatus 1000 illustrated in FIGS. 1 to 7. Accordingly, hereinafter with reference to FIG. 9, the same reference numerals are used to refer to the same or substantially the same components as those described above with reference to FIGS. 1 to 7, and thus, redundant description thereof may not be repeated.

In some embodiments, the temperature of each cooling area CA1 to CA7 may be obtained (S410). For example, the average value of the detection temperatures of the fourth unit area UA4 and the seventh unit area UA7 included in the first cooling area CA1 may be used as the temperature of the first cooling area CA1.

Thereafter, the driving conditions of the cooling groups CG1 to CG7 associated with the respective cooling areas CA1 to CA7 may be determined by comparing the detected temperatures of the cooling areas CA1 to CA7 with the drive starting temperatures in the cooling table (S420). For example, in a case where the temperature of the first cooling area CA1 is 47.1 °C, by comparing with the drive starting temperature of the first cooling area CA1 in the cooling table, the output power or the number of revolutions of the cooling fan of the first cooling group CG1 associated with the first cooling area CA1 may be determined to be 100% of the maximum power (RPM mode), or the cooling fan may be determined to be continuously turned on for 120 seconds (duty mode).

Thereafter, the battery cells EC located in the cooling areas CA1 to CA7 corresponding to the cooling groups CG1 to CG7 may be cooled by driving each of the cooling groups CG1 to CG7 according to the determined driving conditions (S430).

According to the driving conditions of the cooling groups CG1 to CG7, the cooling performance for the corresponding cooling areas CA1 to CA7 may be respectively controlled by adjusting the drive power or driving time of the coolers. For example, the cooling groups CG1 to CG7 may include at least one cooling fan, and the driving conditions may be set as the ratios of actual output voltages of the cooling fans with respect to the maximum output voltage of the cooling fans. Thus, the cooling fans may be driven at different numbers of revolutions from one another depending on the detected temperature to have different cooling performances from one another according to the cooling area. In another example, the driving conditions may be set as the ratios of actual operation times with respect to the maximum operation time of the cooling fans, so that the cooling fans may be driven for different operation times from one another depending on the detected temperature to achieve different cooling performances from one another for the cooling areas CA1 to CA7.

The chargeable-dischargeable battery cells EC as described above may be cooled by the cooling groups CG1 to CG7 independently driven according to the cooling areas CE1 to CE6, so that the battery may be quickly cooled to a uniform or substantially uniform temperature, even in a case where the batteries have significant temperature differences from one another due to the battery preheating.

According to one or more embodiments of the present disclosure as described above, cooling may be respectively performed for the cooling areas set for the battery cells EC aligned on the stage 210 to uniformly or substantially uniformly maintain the temperature of the battery cells EC during the charge-discharge process.

Due to the respective cooling of the cooling areas CA1 to CA6 independently driven according to the cooling groups CG1 to CG7, the batteries may be quickly cooled to a uniform or substantially uniform temperature, even in a case where the batteries have significant temperature differences from one another due to the battery preheating.

Although the present disclosure has been described above with respect to embodiments thereof, the present disclosure is not limited thereto. Various modifications and variations can be made thereto by those skilled in the art within the equivalent scope of the appended claims.

## Claims

1. A heat vacuum charge-discharge apparatus (1000) comprising:
a chamber (100);
a plurality of battery cells (EC) positioned within the chamber (100);
a charge-discharge structure (CDS) configured to perform a charge-discharge process to the plurality of battery cells (EC);
a cooling structure (600) connected to the chamber (100), and comprising a plurality of coolers that are grouped into a plurality of cooling groups (CG1, CG2, CG3, CG4, CG5, CG6, CG7) according to cooling areas (CA1, CA2, CA3, CA4, CA5, CA6, CA7); and
a cooling controller (700) configured to control each of the cooling groups (CG1, CG2, CG3, CG4, CG5, CG6, CG7) and configured to perform a cooling method for the battery cells (EC) according to the cooling areas (CA1, CA2, CA3, CA4, CA5, CA6, CA7) in the charge-discharge process.

2. The heat vacuum charge-discharge apparatus (1000) as claimed in claim 1, wherein the cooling controller (700) is configured to perform the cooling method according to claim 11 for cooling the battery cells (EC) according to the cooling areas (CA1, CA2, CA3, CA4, CA5, CA6, CA7) in the charge-discharge process, and
wherein the cooling controller (700) further comprises:
a battery information detector (710) configured to detect a type and an alignment shape of the battery cells input into the chamber (100);
a map creator (720) configured to create a cooling map by matching the cooling areas (CA1, CA2, CA3, CA4, CA5, CA6, CA7) and the cooling groups (CG1, CG2, CG3, CG4, CG5, CG6, CG7) according to the type and the alignment shape;
a process setter (730) configured to set a cooling table corresponding to the cooling map as a cooling process; and
a cooling driver (740) configured to obtain detection temperatures detected from the cooling areas (CA1, CA2, CA3, CA4, CA5, CA6, CA7), and drive the cooling groups (CG1, CG2, CG3, CG4, CG5, CG6, CG7) according to driving conditions of the cooling process corresponding to the detection temperatures, respectively.

3. The heat vacuum charge-discharge apparatus (1000) as claimed in claim 2, wherein the battery information detector (710) comprises:
a reader (711) configured to read bar codes on the battery cells; and
a tray detector (712) configured to detect information regarding a shape and an alignment aspect of a receiving tray (220) containing the battery cells.

4. The heat vacuum charge-discharge apparatus (1000) as claimed in at least one of the preceding claims, wherein the cooling structure (600) comprises:
a ceiling cooler (610) positioned on an intermediate portion of a ceiling plate (114) of the chamber (100) to cool an intermediate portion (C) of the battery cells positioned below the ceiling cooler (610);
first coolers (621) positioned on first sidewall (111) of the chamber and second coolers (622) positioned on second sidewall (112) of the chamber, with the first and second sidewalls (111, 112) facing each other; and
a lower cooler positioned on a bottom of the chamber to cool a lower portion of the battery cells positioned above the lower cooler, and
wherein the first and second coolers (621, 622) are configured to cool a first side portion (P1) of the battery cells, a second side portion (P2) of the battery cells, and the intermediate portion (C) of the battery cells.

5. The heat vacuum charge-discharge apparatus (1000) as claimed in claim 4, wherein the ceiling cooler comprises a plurality of first fans aligned side by side in a first direction that is a transverse direction of the chamber, and respectively aligned in line along a second direction that is a longitudinal direction of the chamber,
wherein the first cooler comprises a plurality of second fans aligned side by side in the first direction, and respectively aligned in line along the second direction, and
wherein the second cooler comprises a plurality of second fans aligned side by side in the first direction, and respectively aligned in line along the second direction.

6. The heat vacuum charge-discharge apparatus (1000) as claimed in claim one of claims 4 or 5, wherein the cooling groups comprise:
first to third cooling groups configured to cool first to third cooling areas located adjacent in the second direction on the intermediate portion of the battery cells;
fourth to sixth cooling groups configured to cool fourth to sixth cooling areas adjacent to the first to third cooling areas, respectively, on opposite side portions of the battery cells; and
a seventh cooling group configured to cool lower portions of the first to sixth cooling areas,
wherein the first to third cooling groups are associated with the ceiling cooler,
wherein the fourth to sixth cooling groups are associated with the first and second coolers, and
wherein the seventh cooling group is associated with the lower cooler.

7. The heat vacuum charge-discharge apparatus (1000) as claimed in at least one of the preceding claims, wherein the charge-discharge structure (CDS) comprises:
a battery receptacle (200) configured to contain the battery cells (EC) by aligning the battery cells, and configured to heat the battery cells to maintain a predetermined temperature;
a plurality of terminals (300) connected to a ceiling plate (114) of the chamber (100), and configured to be selectively in contact with the battery cells to apply a charge-discharge current for the battery cells; and
a lift (400) configured to move the battery receptacle (200) up and down so that the terminals (300) are selectively in contact with the battery cells.

8. The heat vacuum charge-discharge apparatus (1000) as claimed in claim 7, wherein the battery receptacle (200) comprises:
a stage (210) having a plate shape, and including a heater (211) configured to heat the battery cells positioned on the stage (210);
a plurality of receiving trays (220) extending in a second direction on an upper surface of the stage (210), and spaced from each other in a first direction to contain the battery cells; and
a plurality of temperature sensors (230) positioned according to the cooling areas (CA1, CA2, CA3, CA4, CA5, CA6, CA7) along the receiving trays (220) to detect battery temperatures of the battery cells positioned in the cooling areas (CA1, CA2, CA3, CA4, CA5, CA6, CA7), and transmit the detected battery temperatures to the cooling controller (700).

9. The heat vacuum charge-discharge apparatus (1000) as claimed in claim 8, wherein the terminals (300) comprise:
a plurality of electrode terminal pairs (310) aligned along the receiving trays, and in contact with positive and negative electrodes of the battery cells; and
a plurality of vacuum hoppers (320) positioned between the electrode terminal pairs (310) to extract and remove a reaction gas generated by a chemical reaction inside corresponding battery cell.

10. The heat vacuum charge-discharge apparatus (1000) as claimed in at least one of claims 7 to 9, wherein the lift comprises:
a lift head (410) connected to a bottom surface of the stage (210); and
a lift driver (420) positioned on a bottom portion of the chamber to move the lift head (410) up and down.

11. A method of cooling a heat vacuum charge-discharge apparatus (1000), the method comprising:
creating a cooling map comprising cooling areas of a plurality of battery cells loaded into a chamber comprising a plurality of coolers that are matched with cooling groups, each of the cooling groups comprising at least one cooler from among the plurality of coolers;
setting a cooling table corresponding to the cooling map as a cooling process, the cooling table being one among a plurality of cooling tables comprising driving conditions of the cooling groups that are sorted according to drive starting temperatures of the cooling areas;
obtaining a detection temperature for each of the cooling areas during a heat vacuum charge-discharge process for the battery cells that are preheated; and
cooling the battery cells according to the cooling areas by respectively driving the cooling groups based on the obtained detection temperature of each of the cooling areas and the cooling process.

12. The method as claimed in claim 11, wherein the cooling map is categorized according to a type and an alignment shape of the battery cell,
wherein the cooling table comprises a tag corresponding to the type and the alignment shape of the battery cell, and
wherein in the setting of the cooling table as the cooling process, a cooling table having the tag corresponding to the type and the alignment shape of the cooling map is selected from among the cooling tables.

13. The method as claimed in one of claims 11 or 12, wherein the cooling of the battery cells according to the cooling areas comprises:
determining a driving condition from among the driving conditions of the cooling groups corresponding to the detection temperature of each of the cooling areas from the cooling process; and
driving the cooling groups according to the determined driving conditions, respectively.

14. The method as claimed in claim 13, wherein each of the cooling groups comprises at least one cooling fan, and
wherein the driving condition is set at a ratio of an actual output voltage with respect to a maximum output voltage of the cooling fan.

15. The method as claimed in one of claims 13 or 14, wherein each of the cooling groups comprises at least one cooling fan, and
the driving condition is set at a ratio of an actual operation time with respect to a maximum operation time of the cooling fan.
